Europäisches Patentamt

European Patent Office

Office européen des brevets

(11) Numéro de publication: **0 321 318 B1**

(19)

(12) **FASCICULE DE BREVET EUROPEEN**

(45) Date de publication de fascicule du brevet: **16.09.92**

(51) Int. Cl.⁵: **H04N 7/13**, H04N 7/133, H04N 7/137

(21) Numéro de dépôt: **88402883.8**

(22) Date de dépôt: **17.11.88**

(54) **Procédé et dispositif de codage et de décodage pour la transmission d'images à travers un réseau à débit variable.**

(30) Priorité: **16.12.87 FR 8717577**

(43) Date de publication de la demande:
**21.06.89 Bulletin 89/25**

(45) Mention de la délivrance du brevet:
**16.09.92 Bulletin 92/38**

(84) Etats contractants désignés:
**DE GB IT NL SE**

(56) Documents cités:
**EP-A- 0 060 583       EP-A- 0 235 803
WO-A-80/00646       GB-A- 2 173 067
US-A- 4 077 053       US-A- 4 202 011**

(73) Titulaire: **FRANCE TELECOM
6 place d'Alleray
F-75015 Paris(FR)**

(72) Inventeur: **Guichard, Jacques
8-10, rue des Morillons
F-75015 Paris(FR)**
Inventeur: **Eude, Gérard
26, allée Jean Bart
F-77200 Torcy(FR)**

(74) Mandataire: **Cabinet Martinet & Lapoux
BP 405
F-78055 Saint Ouentin en Yvelines
Cédex(FR)**

## Description

La présente invention concerne de manière générale la transmission d'images, notamment d'images animées telles que des images de télévision. Plus particulièrement, l'invention a trait à un procédé de codage d'images à réduction de débit et de décodage d'images à augmentation de débit, en vue de transmettre un signal numérique d'images animées à travers un réseau numérique à débit variable tel qu'un réseau numérique asynchrone.

Dans l'article "L'image numérique et le codage" paru dans "L'écho des recherches", n° 126, quatrième trimestre 1986, pages 21 à 36, J. GUICHARD et D. NASSE décrivent l'état de la technique dans le domaine du traitement de l'image numérique pour sa transmission à réduction de débit. Les différents dispositifs de codage et de décodage existants sont conçus pour la transmission des images à travers des voies de transmission à débit constant telles, que celles traversant un réseau numérique à intégration de services (RNIS). Généralement, une mémoire tampon de capacité adéquate est prévue en sortie du dispositif de codage afin d'adapter le débit de l'image codée au débit constant de la voie de transmission allouée du réseau. Cette mémoire tampon introduit un temps de retard dans la transmission des images entre des équipements de transmission et de réception placés à des extrémités différentes du réseau et incluant respectivement un dispositif de codage et un dispositif de décodage. Ce temps de retard dans la transmission des images est particulièrement gênant dans le cas des services d'images interactifs, par exemple, tels que la visiophonie à très bas débit (64 kbit/s). L'avantage d'un réseau à débit variable est qu'en offrant la possibilité de transmettre un débit d'information variable, il permet de réduire la capacité de la mémoire tampon, voire de la supprimer, et ainsi de réduire le temps de retard de transmission entre le dispositif de codage et le dispositif de décodage. Toutefois, les réseaux à débit à variable tels que les réseaux asynchrones, ont leur capacité d'écoulement de trafic calculée en fonction de statistiques. Le fait que tous les abonnés n'utilisent pas en même temps le maximum du débit qui leur est alloué, est pris en compte et le réseau est conçu pour écouler un débit total moyen déterminé statistiquement. Il en découle qu'un abonné peut se voir refuser temporairement une augmentation de débit dans le cas où le réseau est en surcharge et où le débit demandé est supérieur à un débit minimum garanti. Le supplément d'informations résultant de l'augmentation demandé de débit n'est dans ce cas pas acheminé jusqu'à sa destination finale. Pour la transmission d'images codées, le non-acheminement du supplément d'information demandé est particulièrement catastrophique du fait que les algorithmes de codage et de décodage sont de type récursif. Il est impératif que des informations ayant été traitées par le dispositif de codage arrivent à destination dans le dispositif de décodage.

L'invention vise à fournir un procédé de codage et de décodage pour la transmission d'images à réduction de débit, sans perte d'informations, à travers un réseau numérique à débit variable.

A cette fin, un procédé de codage et de décodage de signal numérique d'image selon l'invention est tel que défini par la revendication 1.

Selon une première réalisation préférée, un dispositif de codage mettant en oeuvre le procédé selon l'invention est tel que défini par la revendication 3.

Selon une seconde réalisation préférée, un dispositif de décodage mettant en oeuvre le procédé selon l'invention est tel que défini par la revendication 11.

L'invention sera mieux comprise à la lecture de la description suivante de plusieurs réalisations préférées des dispositifs de codage et de décodage selon l'invention en référence aux dessins annexés correspondants dans lesquels :

- la Fig. 1 montre sous forme de bloc-diagramme fonctionnel un système de codage et décodage comprenant un dispositif de codage et un dispositif de décodage selon l'invention reliés à travers un réseau de transmission numérique à débit variable;
- la Fig. 2 est un bloc-diagramme détaillé d'une première rélisation préférée d'un dispositif de codage selon l'invention ;
- la Fig. 3 est un bloc-diagramme détaillé d'une seconde réalisation préférée d'un dispositif de codage selon l'invention.

Dans les paragraphes suivants de la description de dispositifs de codage et de décodage selon l'invention, il est fait appel à l'état de la technique dans le domaine du codage numérique. On se reportera utilement à l'article cité de J. GUICHARD et D. NASSE pour des informations complémentaires concernant notamment la technique de la compensation de mouvement et l'utilisation des transformées dans le domaine de la transmission d'images numériques à réduction de débit.

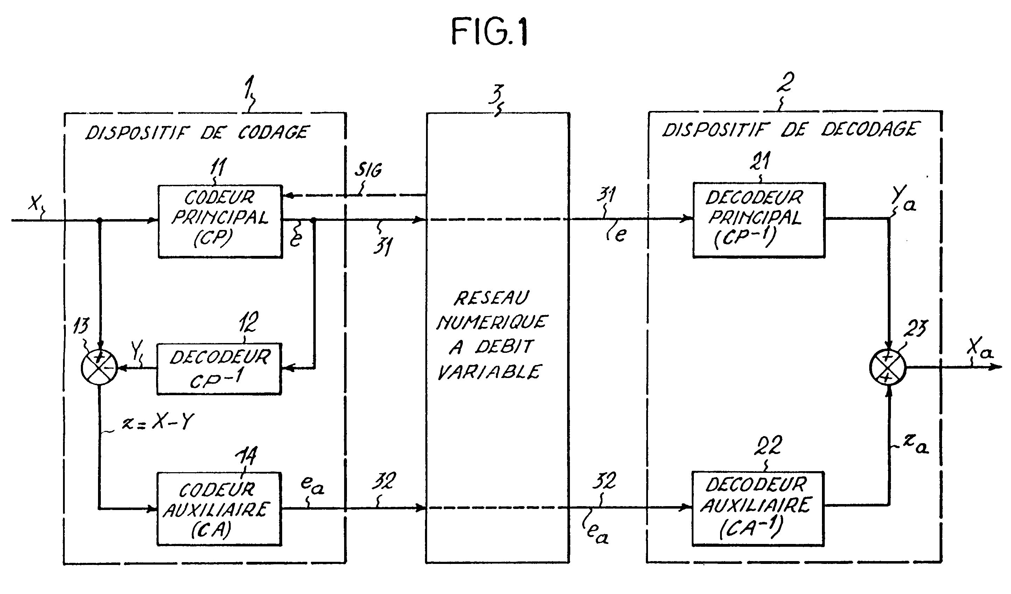

En référence à la Fig. 1, un dispositif de codage 1 et un dispositif de décodage 2 selon l'invention sont reliés à travers un réseau de transmission numérique à débit variable 3 tel qu'un réseau de transmission numérique asynchrone de paquets.

Le dispositif de codage 1 comprend un codeur principal 11 réalisant une fonction de codage CP, un décodeur 12 réalisant une fonction de décodage $CP^{-1}$ inverse à la fonction de codage CP, un soustracteur 13, et un codeur auxiliaire 14 réalisant une fonction de codage CA.

Le codeur principal 11 est de préférence un codeur connu de type à boucle de prédiction. En entrée le codeur 11 reçoit un signal vidéo numérique X constitué de mots d'échantillon numérique résultant à l'échantillonnage d'un signal de luminance ou de chrominance à fréquence constante. En sortie, le codeur 11, délivre en sortie un signal numérique d'erreur quantifié et codé e transmis au dispositif de décodage 2 à travers une première voie de transmission à débit variable 31 du réseau 3. Le signal d'erreur e représente la différence entre le signal X et un signal de prédiction P produit dans le codeur 11 en fonction de valeurs précédentes du signal X. Le signal d'erreur e est également fourni en entrée du décodeur 12 qui délivre en sortie un signal vidéo numérique évalué Y. Le signal évalué Y est appliqué à une entrée inverse "-" du soustracteur 13. Une entrée directe "+" du soustracteur 13 reçoit le signal X. Le soustracteur 13 fournit en sortie un signal numérique d'erreur z représentant la différence entre les signaux X et Y. Le signal z est appliqué en entrée du codeur auxiliaire 14 qui le quantifie et le code en un signal numérique d'erreur quantifié et codé correspondant $e_a$. Le signal $e_a$ est transmis au dispositif de décodage 2 à travers une seconde voie de transmission à débit variable 32 du réseau 3.

Le codeur auxiliaire 14 est de préférence de structure complémentaire au codeur principal 11, tout en réalisant une fonction de codage de même famille que celle du codeur principal 11. Le codeur 14 peut être un codeur sans boucle de prédiction, à la différence du codeur principal 11, et réalise par exemple une fonction de codage de type MIC ou MICD (codage MIC différentiel) alors que le codeur principal réalise une fonction de codage par exemple de type à transformée en cosinus discrète TCD, ou inversement.

Lorsque le réseau 3 est en mesure d'écouler à travers la voie 31, la totalité du débit d'informations que peut fournir le codeur principal 11, le codeur 11 fonctionne selon un mode à résolution maximale, et le signal évalué Y et représentant une évaluation de l'information contenue dans le signal vidéo X effectivement transmise par le signal codé e, à travers la voie 31, est peu différent du signal X. Le signal d'erreur z = X - Y est alors voisin de zéro. Le codeur auxiliaire 14 est inactif et aucune information d'image n'est écoulée à travers la voie 32. Lorsque le réseau 3 n'est pas en mesure d'écouler à travers la voie 31 la totalité du débit d'information que pourrait fournir le codeur principal 11, par exemple pour des raisons d'encombrement du réseau 3, le codeur 11 se place dans un mode de fonctionnement à résolution réduite par exemple en augmentant les intervalles de quantification du signal X et donc en réduisant le nombre des niveaux de quantification du signal X, et le signal évalué Y devient sensiblement différent du signal X. Le signal d'erreur z = X - Y a alors une valeur non nulle représentant un supplément de précision relative au signal X et non transmis à travers la voie 31. Le codeur auxiliaire 14 est actif et délivre dans la voie 32 un signal $e_a$ non nul. A travers la voie 32 est ainsi transmis un supplément d'informations relatif au signal X afin que le dispositif de décodage 2 soit en mesure de récupérer le signal X avec la précision requise. En pratique, il est à noter qu'un circuit de mémoire tampon inclus dans le codeur principal 99 reçoit une marque de signalisation SIG du central de commutation de rattachement dans le réseau 3 afin d'indiquer le débit instantané qui peut être écoulé dans la voie 31.

Le dispositif de décodage 2 comprend un décodeur principal 21 réalisant la fonction de décodage $CP^{-1}$ inverse à la fonction de codage CP réalisée par le codeur 11, et un additionneur 23.

Les décodeurs 21 et 22 reçoivent en entrée respectivement les signaux e et $e_a$ transmis dans les voies 31 et 32. Les décodeurs 21 et 22 reconstituent respectivement des signaux $Y_a$ et $z_a$ à partir des signaux e et $e_a$ reçus. Les signaux $Y_a$ et $z_a$ sont appliqués respectivement à des première et seconde entrées de l'additionneur 23. L'additionneur 23 fournit en sortie un signal vidéo numérique récupéré $X_a$ correspondant au signal X.

Le bloc-diagramme du dispositif de codage selon l'invention décrit en référence à la Fig. 1 est un bloc-diagramme de principe dans lequel le codeur principal 11 et le décodeur 12 sont présentés sous forme d'éléments fonctionnels distincts. En fait, dans les codeurs connus de type prédictif, le décodeur est inclus dans la boucle de prédiction du codeur de telle sorte que le signal Y peut être prélevé directement en un point de connexion déterminé du codeur principal 11. La complexité d'un dispositif de codage selon l'invention est sensiblement réduite en raison de cette caractéristique.

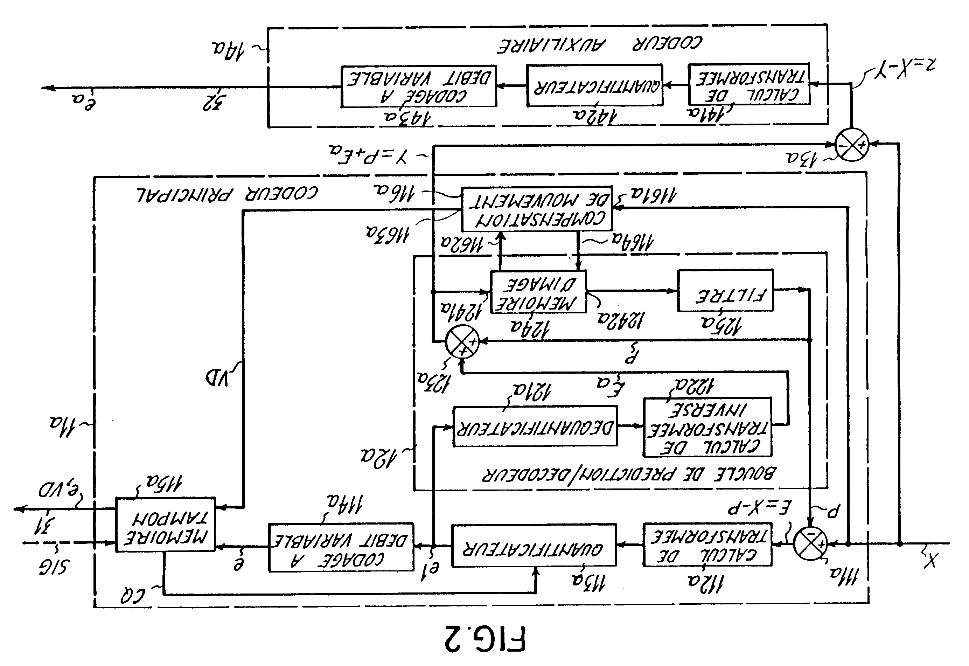

En référence à la Fig. 2, une première réalisation préférée du dispositif de codage 1 selon l'invention comprend un codeur principal 11a ayant une boucle de prédiction constituant un décodeur 12a, un soustracteur 13a, et un codeur auxiliaire 14a.

Le codeur principal 11a est un codeur de type à transformée, à boucle de prédiction et compensation de mouvement. Il comprend un soustracteur 111a, un circuit de calcul de transformée 112a, un quantificateur à niveaux de quantification ajustables 113a, un circuit de codage à débit variable 114a, un circuit à mémoire tampon 115a, une boucle de prédiction/décodeur 12a, et un circuit de compensation de mouvement 116a.

Le soustracteur 111a reçoit à une entrée directe " + " le signal vidéo numérique entrant X et à une entrée inverse "-" un signal numérique P résultant d'une prédiction de la valeur du signal X, et fournit un signal numérique d'erreur $E = X-P$. Le signal E est appliqué en entrée du circuit de calcul de transformée 112a qui réalise sur le signal E une transformation réversible, par exemple une transformation en cosinus discrète TCD, afin de représenter le signal E dans un espace, autre que l'espace de représentation de signal X, assurant une meilleure décorrélation entre les différents points d'image. Le signal E, après transformation, est fourni au quantificateur 113a qui produit un signal numérique d'erreur transformé et quantifié el correspondant au signal E. Les niveaux de quantification dans le quantificateur 113a sont ajustés par un signal de commande CQ fourni par le circuit à mémoire tampon 115a à une entrée d'ajustement de niveaux du quantificateur 113a. Le signal el est fourni en entrée du circuit de codage à débit variable 114a et en entrée d'un déquantificateur 121a inclus dans la boucle de prédiction/décodeur 12a. Le circuit de codage à débit variable 114a code chaque échantillon numérique du signal el en un mot numérique correspondant ayant un nombre de bit dépendant de la valeur de l'échantillon. Le circuit 114a réalise une réduction de débit en optimisant à une valeur minimale le nombre de bits nécessaire à la représentation de chaque échantillon. Le circuit 114a fournit le signal numérique d'erreur quantifié et codé e. Le signal e est appliqué à une première entrée du circuit à mémoire tampon 115a. Une seconde entrée du circuit à mémoire tampon 115a reçoit un signal numérique VD portant des mots numériques représentatifs de vecteurs de déplacement de bloc d'image. Les échantillons et mots numériques des signaux e et VD sont chargés dans le circuit à mémoire tampon 115a et transmis dans la voie 31 du réseau à débit variable 3 (Fig. 1) par ordre chronologique d'arrivée. Le circuit à mémoire tampon 115a comprend une mémoire tampon, qui est analogue à une mémoire tampon incluse dans un codeur classique pour réseau de transmission à débit constant, mais qui a une capacité bien plus réduite. Le circuit 115a a pour fonction de réaliser une adaptation de débit entre le débit du signal e et le débit instantané de la voie 31 signalé par le central de commutation de rattachement, ces débits correspondant aux horloges d'écriture et de lecture de la mémoire tampon. La mémoire tampon 115a commande l'ajustement des niveaux de quantification dans le quantificateur 113a en fonction de son niveau de remplissage, via le siganl de commande CQ. Le nombre de niveaux de quantification dans le quantificateur 113a est d'autant plus réduit que le nombre de cellules occupées dans la mémoire tampon 115a est grand, c'est-à-dire que le débit instantané dans la voie 32 est inférieur au débit du signal e.

La boucle de prédiction/décodeur 12a comprend, outre le déquantificateur 121a, un circuit de calcul de transformée inverse 122a, un sommateur 123a, un circuit à mémoire d'image 124a, et un filtre numérique 125a.

Le déquantificateur 121a et le circuit de calcul de transformée inverse 122a sont montés en cascade afin de reconstruire à partir du signal d'erreur transformé et quantifié el, un signal numérique d'erreur Ea correspondant représenté dans le même espace que le signal X et ayant un débit égal à celui du signal X. Le signal Ea est appliqué à une première entrée du sommateur 123a. Une seconde entrée du sommateur 123a reçoit le signal de prédiction P. Une sortie du sommateur 123 produit le signal vidéo numérique évalué $Y = P + Ea$. Le signal Y est appliqué à une entrée 1241a du circuit à mémoire d'image 124a et à une entrée inverse "-" du soustracteur 13a recevant à une entrée directe " + " le signal entrant X. Le circuit à mémoire d'image 124a comprend une mémoire d'image qui mémorise la valeur précédente du signal Y pour un même point d'image, valeur qui est traitée par le circuit de compensation de mouvement 116a et qui participe à la prédiction de la valeur du signal X pour ledit point d'image. Le signal de prédiction P a un débit égal à celui du signal X et est appliquée par une sortie 1242a du circuit à mémoire d'image 124a, à travers le filtre 125a, à la seconde entrée du sommateur 123a et à l'entrée inverse du soustracteur 111a.

Le circuit de compensation de mouvement 116a comprend une unité de traitement centrale, constituée par exemple d'un microprocesseur, traitant en fonction d'un microprogramme les différentes valeurs du signal évalué Y mémorisées dans la mémoire d'image du circuit 124a et les différentes valeurs du signal X afin de calculer des vecteurs de déplacement de bloc respectivement pour une pluralité de blocs d'image prédéterminés. Chaque vecteur représente le déplacement d'un bloc correspondant d'une image entrante portée par le signal X par rapport à la position de ce même bloc dans l'image précédente. Une telle prédiction interimage peut être éventuellement combinée à une prédiction infraimage entre blocs d'une même image. Le circuit de compensation de mouvement 116a reçoit le signal vidéo entrant X à une entrée 1161a et des valeurs mémorisées du signal Y lues dans la mémoire d'image à une entrée 1162a. Les mots numériques VD représentatifs des vecteurs de déplacement sont délivrés par une sortie 1163a du circuit 116a. En fonction des vecteurs de déplacement calculés, le circuit de compensation de mouvement 116a modifie éventuellement les valeurs du signal Y mémorisées dans la mémoire tampon du circuit 124a afin d'affiner la prédiction du signal X. Une liaison 1164a entre le circuit de compensation de mouvement 116a et le circuit à mémoire d'image 124a est prévue pour écrire les valeurs modifiées du signal Y dans la mémoire d'image.

Le codeur auxiliaire 14a ne comprend pas de boucle de prédiction. Il comprend un circuit de calcul de transformée 141a, un quantificateur 142a, et un circuit de codage à débit variable 143a. Le circuit 141a, le quantificateur 142a et le circuit 143a sont montés en cascade afin de produire à partir du signal numérique d'erreur $z = X-Y$ fournit par le soustracteur 13a, le signal numérique d'erreur $e_a$ transmis dans la voie 32. Le circuit de calcul de transformée 141a reçoit en entrée le signal $z$; le circuit de codage à débit variable 143a fournit en sortie le signal $e_a$; le quantificateur 142a est placé entre les circuits 141a et 143a. Les circuits 141a et 143a sont des circuits analogues aux circuits 112a et 114a du codeur principal 11a. Le quantificateur 142a est à niveaux de quantification fixes contrairement au quantificateur 113a du codeur principal 11a. Le circuit de codage à débit variable 143a fournit un débit d'information qui varie sans toutefois excéder un débit minimum garanti dans la voie 32 par le réseau à débit variable 3.

La structure détaillée du dispositif de décodage 2 adapté au dispositif de codage décrit en référence à la Fig. 2 peut aisément être déduite par l'homme du métier à partir de la description ci-dessus du dispositif de codage et de la structure générale du dispositif de décodage 2 décrite en référence à la Fig. 1. Le décodeur principal comprend un circuit à mémoire tampon suivi d'un circuit de décodage complémentaire au circuit de codage à débit variable 114a montré à la Fig. 2 et d'une boucle de prédiction telle que la boucle de prédiction/décodeur 12a, montrée à la Fig.2. Un circuit de compensation de mouvement recevant les mots numériques VD prélevés dans la mémoire tampon du décodeur principal et traitant les valeurs mémorisées et lues dans la mémoire d'image de la boucle de prédiction en fonction des mots VD reçus doit également être prévu dans le décodeur principal. Le décodeur auxiliaire comprend un circuit de décodage complémentaire au circuit de codage à débit variable 143a montré à la Fig. 2 suivi d'un déquantificateur et d'un circuit de calcul de transformée inverse.

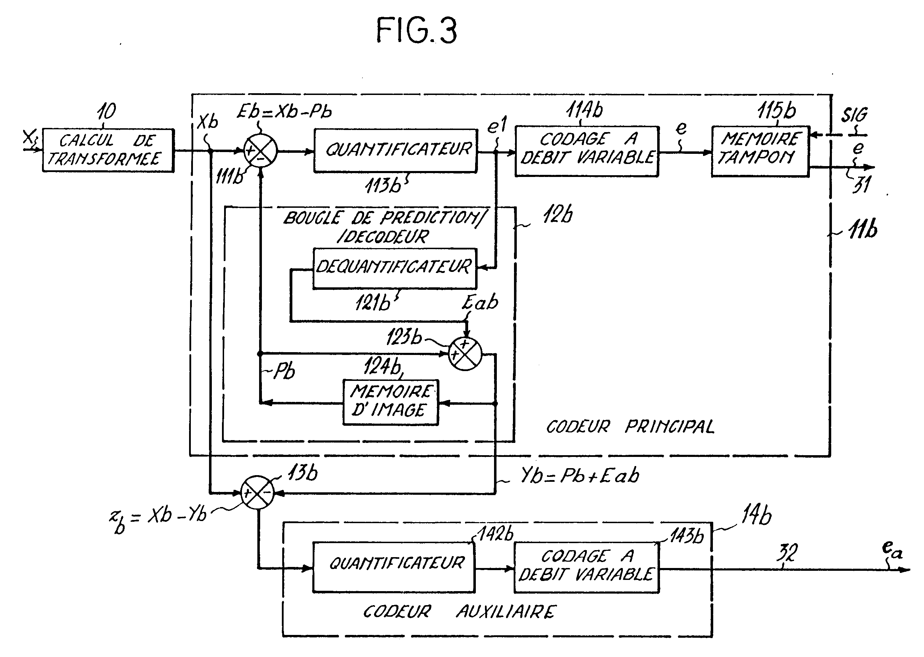

En référence à la Fig. 3, une seconde réalisation préférée de structure simplifiée d'un dispositif de codage 1 selon l'invention comprend un circuit de calcul de transformée 10 placé en entrée d'un codeur principal 11b qui est de type à transformée et boucle de prédiction et qui inclut une boucle de prédiction/décodeur 12b, un soustracteur 13b et un codeur auxiliaire 14b.

Le codeur principal 11b et le codeur auxiliaire 14b ont des structures plus simples que celles des codeurs 11a et 14a montrés à la Fig. 2 du fait que le codeur 11b n'effectue pas de compensation de mouvement.

Le codeur principal 11b comprend, outre la boucle de prédiction/décodeur 12b, un soustracteur 111b, un quantificateur 113b, un circuit de codage à débit variable 114b, et un circuit à mémoire tampon 115b. La boucle de prédiction/décodeur 12b comprend un déquantificateur 121b, un sommateur 123b et un circuit à mémoire d'image 124b.

Contrairement au codeur 11a montré à la Fig. 2, où le circuit de calcul de transformée 112a est placé en sortie du soustracteur 111a, le circuit de calcul de transformée 10 est relié à l'entrée directe "+" du soustracteur 111b et reçoit en entrée le signal vidéo numérique entrant X pour produire en sortie un signal vidéo numérique transformé Xb. Le soustracteur 111b reçoit le signal transformé Xb à l'entrée directe "+" et un signal numérique de prédiction Pb à l'entrée inverse "-". Le signal Pb résulte d'une prédiction du signal transformé Xb. Le soustracteur 111b applique en entrée du quantificateur 113b un signal numérique d'erreur transformé $Eb = Xb-Pb$. Le quantificateur 113b est à niveaux de quantification fixes; il délivre en sortie le signal numérique d'erreur transformé et quantifié el correspondant au signal Eb. Le signal el est appliqué en entrée du circuit de codage à débit variable 114b et du déquantificateur 121b inclus dans la boucle de prédiction/décodeur 12b. Le circuit 114b est analogue au circuit de codage à débit variable 114a montré à la Fig. 2; il délivre en sortie le signal numérique d'erreur e correspondant au signal el et transmis dans la première voie 31 du réseau 3 à travers le circuit à mémoire tampon 115b.

Dans la boucle de prédiction/décodeur 12b, le déquantificateur 121b recevant en entrée le signal el, produit en sortie un signal numérique d'erreur transformé Eab reconstruit à partir du signal el. Le sommateur 123b reçoit à des première et seconde entrées les signaux Eab et Pb, respectivement, délivre en sortie un signal vidéo numérique évalué $Yb = Pb + Eab$. Le signal Yb est fourni en entrée du circuit à mémoire d'image 124b et à l'entrée inverse "-" du soustracteur 13b dont l'entrée directe "+" reçoit le signal Xb. Le circuit à mémoire d'image 124b fournit en sortie le signal de prédiction Pb.

Le codeur auxiliaire 14b comprend un quantificateur 142b et un circuit de codage à débit variable 143b analogues aux circuits 142a et 143a montrés à la Fig. 2. Le quantificateur 142b reçoit en entrée un signal numérique d'erreur transformé $z_b = Xb-Yb$ produit par le soustracteur 13b. Le quantificateur 142b est suivi du circuit de codage à débit variable 143b qui délivre le signal numérique d'erreur $e_a$ transmis dans la seconde voie 32 du réseau 3.

La structure détaillée du dispositif de décodage 2 adapté au dispositif de codage montré à la Fig. 3, de même que pour le dispositif de codage montré à la Fig. 2, peut aisément être déduite par l'homme du métier. Le décodeur principal comprend un circuit à mémoire tampon suivi d'un circuit de décodage complémentaire au circuit de codage à débit variable 114b montré à la Fig. 3 et d'une boucle de prédiction telle que la boucle de prédiction/décodeur 12b montrée à la Fig. 3. Le décodeur auxiliaire comprend un circuit de décodage complémentaire au circuit de codage à débit variable 143b montré à la Fig. 3 suivi d'un déquantificateur. Un circuit de calcul de transformée inverse est prévu en sortie du sommateur 23 (Fig. 1) dans le dispositif de décodage 2.

**Revendications**

1. Procédé de codage et décodage de signal numérique d'image selon lequel dans un dispositif de codage (1) recevant un signal vidéo numérique entrant (X) convoyant des informations d'images est produit un premier signal numérique codé (e) transmis dans une première voie de transmission (31) d'un réseau de transmission numérique (3) et obtenu notamment par réduction de débit du signal entrant (X) en fonction du débit d'information instantané qui est susceptible d'être écoulé par ladite première voie (31), et dans un dispositif de décodage (2) relié à la première voie (31) est restitué un signal vidéo numérique (Xa) sensiblement analogue au signal vidéo entrant (X) et obtenu notamment par augmentation de débit du signal codé (e) en fonction du débit instantané de ladite première voie, caractérisé en ce que la première voie (31) ainsi qu'une seconde voie de transmission (32) dans le réseau de transmission (3) sont à débit variable, dans le dispositif de codage (1) est produit un second signal numérique codé ($e_a$) transmis dans ladite seconde voie (32) et convoyant un supplément d'informations d'images déterminé sensiblement en fonction de la différence des informations d'images entre le signal numérique entrant (X) et le premier signal codé (e), ledit supplément d'informations d'images étant produit lorsque le débit instantané de la première voie (31) est inférieur au débit d'informations que doit fournir le dispositif de codage (1), et dans le dispositif de décodage (2) relié également à la seconde voie (32) est produit ledit signal vidéo numérique restitué (Xa) en fonction du décodage des premier et second signaux numériques codés (e, $e_a$).

2. Procédé conforme à la revendication 1, caractérisé en ce que le débit du second signal numérique codé ($e_a$) est inférieur à un débit minimum prédéterminé de la seconde voie à débit variable (32) et de préférence, est constant.

3. Dispositif (1) de codage pour la mise en oeuvre du procédé conforme à la revendication 1 ou 2, caractérisé en ce qu'il comprend :
   des premiers moyens (11) pour coder le signal vidéo numérique entrant (X) en le premier signal numérique codé (e) transmis dans la première voie (31) du réseau de transmission (3),
   des moyens (12) pour évaluer les informations d'images contenues dans le signal vidéo numérique entrant (X) et effectivement transmises par le premier signal codé (e) à travers la première voie (31) afin de produire un signal vidéo numérique évalué (Y),
   des moyens (13) pour soustraire le signal vidéo numérique évalué (Y) au signal vidéo numérique entrant (X) afin de produire un signal vidéo numérique d'erreur (z) représentant ledit supplément d'informations d'images, et
   des seconds moyens (14) pour coder le signal vidéo numérique d'erreur (z) en le second signal numérique codé ($e_a$) transmis dans la seconde voie (32) du réseau de transmission (3).

4. Dispositif de codage conforme à la revendication 3, caractérisé en ce que les seconds moyens pour coder (14) comprennent des moyens (142a, 142b) pour quantifier le signal vidéo numérique d'erreur (z) en un signal d'erreur quantifié, et des moyens (143a, 143b) pour coder à débit variable de bits ledit signal d'erreur quantifié en ledit second signal numérique codé ($e_a$).

5. Dispositif de codage conforme à la revendication 3 ou 4, caractérisé en ce que les premiers moyens pour coder (11) et les moyens pour évaluer (12) constituent un codeur (11a, 11b) du type à boucle de prédiction (12a, 12b).

6. Dispositif de codage conforme à l'une quelconque des revendications 3 à 5, caractérisé en ce qu'il comprend des moyens supplémentaires (10) pour calculer un signal vidéo numérique transformé (Xb) à partir du signal vidéo numérique entrant (X), selon une transformation d'images prédéterminée, ledit signal vidéo numérique transformé (Xb) étant fourni en entrée des premiers moyens pour coder (11b) et des moyens pour soustraire (13b).

**7.** Dispositif de codage conforme à l'une quelconque des revendications 3 à 5, caractérisé en ce que les premiers moyens pour coder (11) et les moyens pour évaluer (12a), constituent un codeur comprenant des premiers moyens de calcul (112a) de la transformée d'un signal d'erreur (E) entre le signal vidéo entrant (X) et un signal vidéo de prédiction (P), selon une transformation prédéterminée, et une boucle de prédiction (12a) incluant des moyens de compensation de mouvement d'images (116a) et des seconds moyens de calcul de transformée (122a) selon une transformation inverse à celle éffectuée par les premiers moyens de calcul (112a).

**8.** Dispositif de codage conforme à la revendication 6 ou 7, caractérisé en ce que ladite transformation prédéterminée est une transformation en cosinus (TCD).

**9.** Dispositif de codage conforme aux revendications 4 et 7, caractérisé en ce que les seconds moyens pour coder (14a) comprennent des moyens (141a) pour calculer un signal d'erreur transformé à partir du signal vidéo numérique d'erreur (z) selon une seconde transformation prédéterminée, ledit signal d'erreur transformé étant appliqué en entrée des moyens pour quantifier le signal d'erreur (142a).

**10.** Dispositif de codage conforme à la revendication 9, caractérisé en ce que ladite seconde transformation prédéterminée est une transformation du type MIC ou MICD.

**11.** Dispositif de décodage (2) pour la mise en oeuvre du procédé conforme à l'une des revendications 1 ou 2, caractérisé en ce qu'il comprend

des premiers moyens (21) complémentaires aux premiers moyens pour coder (11) et aux moyens pour évaluer (12) inclus dans le dispositif de codage conforme à l'une quelconque des revendications 3 à 9 pour décoder le premier signal numérique codé (e) reçu en un premier signal vidéo numérique décodé ($Y_a$) analogue audit signal évalué (Y),

des seconds moyens (22) complémentaires aux seconds moyens pour coder (14) inclus dans ledit dispositif de codage pour décoder le second signal numérique codé ($e_a$) reçu en un second signal vidéo numérique décodé ($z_a$) analogue audit signal vidéo numérique d'erreur (3), et

des moyens (23) pour sommer les premier et second signaux vidéo numériques décodés ($Y_a,z_a$) afin de produire ledit signal vidéo numérique restitué (Xa).

**Claims**

**1.** Digital picture signal coding and decoding method wherein, in a coding device (1), receiving an incoming digital video signal (X) carrying picture informations is produced a first coded digital signal (e) transmitted along a first transmission path (31) of a digital transmission network (3) and obtained notably by rate decrease of the incoming signal (X) as a function of the instantaneous information rate which is liable to be dispatched by said first path (31), and in a decoding device (2) connected to the first path (31) is recovered a digital video signal (Xa) substantially analogous to the incoming video signal (X) and obtained notably by rate increase of the coded signal (e) as a function of the instantaneous rate of said first path, characterized in that the first path (31) as well as a second transmission path (32) in the transmission network (3) are with variable rate, in the coding device (1) is produced a second coded digital signal ($e_a$) transmitted along said second path (32) and carrying additional picture information substantially determined as a function of the difference in picture information between the incoming digital signal (X) and the first coded signal (e), said additional picture information being produced when the instantaneous rate of the first path (31) is lower than the information rate that the coding device (1) should supply, and in the decoding device (2) also connected to the second path (32) is produced said recovered digital video signal (Xa) as a function of the decoding of first and second coded digital signals (e, $e_a$).

**2.** Method according to claim 1, characterized in that the rate of the second coded digital signal ($e_a$) is lower than a predetermined minimum rate of the second variable rate path (32), and is preferably constant.

**3.** Coding device (1) for carrying out the method according to claim 1 or 2, characterized in that it comprises :

first means (11) for coding the incoming digital video signal (X) into the first coded digital signal (e) transmitted along said first path (31) of said transmission network (3),

means (12) for estimating the picture information contained in the incoming digital video signal (X) and effectively transmitted by the first coded signal (e) through the first path (31) thereby deriving an estimated digital video signal (Y),

means (13) for subtracting the estimated digital video signal (Y) from the incoming digital video signal (X) thereby deriving digital video error signal (z) representing said additional picture information, and

second means (14) for coding said digital video error signal (z) into the second coded digital signal ($e_a$) transmitted along the second path (32) of the transmission network (3).

4. Coding device according to claim 3, characterized in that the second coding means (14) comprise means (142a, 142b) for quantizing the digital video error signal (z) into a quantized error signal, and means (143a, 143b) for coding with variable bit rate said quantized error signal into said second coded digital signal ($e_a$).

5. Coding device according to claim 3 or 4 characterized in that the first coding means (11) and the estimating means (12) make up a coder (11a,11b) of the predicting loop type (12a,12b).

6. Coding device according to any one of claims 3 to 5, characterized in that it comprises additional means (10) for calculating a transformed digital video signal (Xb) from the incoming digital video signal (X) according to a predetermined picture transformation, said transformed digital video signal (Xb) being supplied at input of the first coding means (11b) and the subtracting means (13b).

7. Coding device according to any one of claims 3 to 5, characterized in that the first coding means (11) and the estimating means (12a) make up a coder comprising first means (112a) calculating for the transform of an error signal (E) between the incoming video signal (X) and a predicting video signal (P) according to a predetermined transformation, and a predicting loop (12a) including picture movement compensating (116a) means and second means (122a) for calculating transform according to a transformation inverse of that performed by the first calculating means (112a).

8. Coding device according to claim 6 or 7, characterized in that said predetermined transformation is a cosine transformation (DCT).

9. Coding device according to claims 4 and 7, characterized in that the second coding means (14a) comprise means for calculating a transformed error signal from the digital video error signal (z) according to a second predetermined transformation, said transformed error signal being applied at input of the error signal quantizing means (142a).

10. Coding device according to claim 9, characterized in that said second predetermined transformation is a transformation of the PCM or DPCM type.

11. Decoding device (2) for carrying out the method according to one of claims 1 or 2, characterized in that it comprises :

first means (21) that complement the first coding means (11) and the estimating means (12) included in the coding device according to any one of claims 3 to 9 for decoding the first coded digital signal (e) received into a first decoded digital video signal (Ya) analogous to said estimated signal (Y),

second means (22) that complement the second coding means (14) included in the coding device for decoding the second coded digital signal ($e_a$) received into a second decoded digital video signal ($z_a$) analogous to said digital video error signal (3), and

means (23) for adding up the first and second decoded digital video signals ($Y_a$,$z_a$) therery deriving said recovered digital video signal (Xa).

**Patentansprüche**

1. Verfahren zur digitalen Bildsignal-Kodierung und -Dekodierung, bei dem in einer Kodierungsvorrichtung (1), die ein Bildinformationen überführendes digitales Videoeingangssignal (X) empfängt, ein erstes kodiertes digitales Signal erzeugt wird, das in einem ersten Übertragungskanal (31) eines digitalen Übertragungsnetzes (3) übertragen und insbesondere durch Durchsatzreduktion des Eingangssignals (X) abhängig vom Informationsmomentandurchsatz erhalten wird, der durch den ersten Kanal (31) in Durchlauf gebracht werden kann, und in einer mit dem ersten Kanal (31) verbundenen Dekodierungsvorrichtung (2) ein digitales Videosignal (Xa) wiederhergestellt wird, das im wesentlichen zu dem Vodeoeingangssignal (X) analog ist und insbesondere durch Durchsatzerhöhung des kodierten Signals (e) abhängig vom Momentandurchsatz des ersten Kanals erhalten wird, dadurch **gekennzeichnet,** daß der erste Kanal (31) sowie ein zweiter Übertragungskanal (32) im Übertragungsnetz (3) mit veränderlichem Durchsatz sind, in der Kodierungsvorrichtung (1) ein zweites kodiertes digitales Signal ($e_a$) erzeugt wird, das im zweiten Kanal (32) übertragen wird und einen Zusatz von Bildinformationen überführt, der im wesentlichen abhängig von der Differenz der Bildinformationen zwischen dem digitalen Eingangssignal (X) und dem kodierten ersten Signal (e) bestimmt wird, wobei der Bildinformationszusatz erzeugt wird, wenn der Momentandurchsatz des ersten Kanals (31) kleiner als der Informationsdurchsatz ist, den die Kodierungsvorrichtung (1) liefern soll, und in der ebenfalls mit dem zweiten Kanal (32) verbundenen Dekodierungsvorrichtung (2) das wiederhergestellte digitale Bildsignal (Xa) erzeugt wird, abhängig von der Dekodierung der ersten und zweiten kodierten digitalen Signale (e, e$_a$).

2. Verfahren nach Anspruch 1, dadurch **gekennzeichnet,** daß der Durchsatz des zweiten kodierten digitalen Signals (e$_a$) kleiner als ein vorbestimmter Minimaldurchsatz des zweiten Kanals mit veränderlichem Durchsatz (32) und vorzugsweise konstant ist.

3. Kodierungsvorrichtung (1) für die Durchführung des Verfahrens nach Anspruch 1 oder 2, dadurch **gekennzeichnet,** daß sie umfaßt:
   - erste Mittel (11) zur Kodierung des digitalen Videoeingangssignals (X) zum ersten kodierten digitalen Signal (e), das im ersten Kanal (31) des Übertragungsnetzes (3) übertragen wird,
   - Mittel (12) zur Auswertung der Bildinformationen, die im digitalen Videoeingangssignal (X) enthalten sind und durch das erste kodierte Signal (e) über den ersten Kanal (31) wirksam übertragen werden, um ein ausgewertetes digitales Videosignal (Y) zu erzeugen,
   - Mittel (13) zur Subtraktion des ausgewerteten digitalen Videosignals (Y) zum digitalen Videoeingangssignal (X), um ein digitales Videofehlersignal (z) zu erzeugen, das den Bildinformationszusatz darstellt, und
   - zweite Mittel (14) zur Kodierung des digitalen Videofehlersignals (z) zum zweiten kodierten digitalen Signal (e$_a$), das im zweiten Kanal (32) des Übertragungsnetztes (3) übertragen wird.

4. Kodierungsvorrichtung nach Anspruch 3, dadurch **gekennzeichnet,** daß die zweiten Mittel zur Kodierung (14) Mittel (142a, 142b) zur Quantifizierung des digitalen Videofehlersignals (z) zu einem quantifizierten Fehlersignal und Mittel (143a, 143b) zur Kodierung mit veränderlichen Bitdurchsatz des quantifizierten Fehlersignals zum zweiten kodierten digitalen Signal (e$_a$) umfassen.

5. Kodierungsvorrichtung nach Anspruch 3 oder 4, dadurch **gekennzeichnet,** daß die ersten Mittel zum Kodieren (11) und die Mittel zum Auswerten (12) einen Kodierer (11a, 11b) vom Typ mit Prädiktionsschleife (12a, 12b) bilden.

6. Kodierungsvorrichtung nach einem beliebigen der Ansprüche 3 bis 5, dadurch **gekennzeichnet,** daß sie Zusatzmittel (10) zur Berechnung eines transformierten digitalen Videosignals (Xb) ausgehend vom digitalen Videoeingangssignal (X) gemäß einer vorbestimmten Bildtransformation aufweist, wobei das transformierte digitale Videosignal (Xb) am Eingang der ersten Mittel zum Kodieren (11b) und der Mittel zum Subtrahieren (13b) geliefert wird.

7. Kodierungsvorrichtung nach einem beliebigen der Ansprüche 3 bis 5, dadurch **gekennzeichnet,** daß die ersten Mittel zum Kodieren (11) und die Mittel zum Auswerten (12a) einen Kodierer bilden, der erste Mittel zur Berechnung (112a) der Transformierten eines Fehlersignals (E) zwischen dem Videoeingangssignal (X) und einem Videoprädiktionssignal (P) gemäß einer vorbestimmten Transformation und eine Prädiktionsschleife (12a), enthaltend Mittel zur Bildbewegungskompensation (116a) und zweite Mittel zur Transformierten-Berechnung (122a) gemäß einer Transformation invers zu der durch die ersten Berechnungsmittel (112a) ausgeführten umfaßt.

8. Kodierungsvorrichtung nach dem Anspruch 6 oder 7, dadurch **gekennzeichnet,** daß die vorbestimmte Transformation eine Cosinus-Transformation (TCD) ist.

9. Kodierungsvorrichtung nach den Ansprüchen 4 und 7, dadurch **gekennzeichnet,** daß die zweiten Mittel zum Kodieren (14a) Mittel (141a) zur Berechnung eines Transformiertenfehlersignals ausgehend vom digitalen Videofehlersignal (z) gemäß einer zweiten vorbestimmten Transformation umfassen, wobei das transformierte Fehlersignal auf den Eingang der Mittel zur Quantifizierung des Fehlersignals (142a) gegeben wird.

10. Kodierungsvorrichtung nach Anspruch 9, dadurch **gekennzeichnet,** daß die zweite vorbestimmte Transformation eine Transformation vom MIC- oder MICD-Typ ist.

11. Dekodierungsvorrichtung (2) zur Durchführung des Verfahrens nach dem einen der Ansprüche 1 oder 2, dadurch **gekennzeichnet,** daß sie umfaßt

9

- erste Mittel (21) komplementär zu den ersten Mitteln zum Kodieren (11) und zu den Mitteln zum Auswerten (12), die in der Kodierungsvorrichtung gemäß einem beliebigen der Ansprüche 3 bis 9 enthalten sind, um das empfangene erste kodierte digitale Signal (e) zu einem dekodierten ersten digitalen Videosignal ($Y_a$) analog zu dem ausgewerteten Signal (Y) zu dekodieren,
- zweite Mittel (22) komplementär zu den zweiten Mitteln zum Kodieren (14), die in der Kodierungsvorrichtung enthalten sind, um das empfangene zweite kodierte digitale Signal ($e_a$) zu einem zweiten dekodierten digitalen Videosignal ($Z_a$) analog zu dem digitalen Videofehlersignal (3) zu dekodieren, und
- Mittel (23) zur Summierung der ersten und zweiten dekodierten digitalen Videosignale ($Y_a$, $z_a$), um das wiederhergestellte digitale Videosignal (Xa) zu erzeugen.

# FIG.1

DISPOSITIF DE CODAGE

*1*

*11*
CODEUR PRINCIPAL (CP)

*12*
DECODEUR CP-1

*13*

*14*
CODEUR AUXILIAIRE (CA)

$X$

$e$

$Y$

$z = X - Y$

$e_a$

$SIG$

*31*
*31*

*32*

*3*
RESEAU NUMERIQUE A DEBIT VARIABLE

*2*
DISPOSITIF DE DECODAGE

*21*
DECODEUR PRINCIPAL (CP-1)

*22*
DECODEUR AUXILIAIRE (CA-1)

*23*

*31*
$e$

*32*
$e_a$

$Y_a$

$X_a$

$z_a$

EP 0 321 318 B1

# FIG.2

EP 0 321 318 B1

# FIG.3

CALCUL DE TRANSFORMEE  **10**

$Eb = Xb - Pb$

QUANTIFICATEUR  **113b**

CODAGE A DEBIT VARIABLE  **114b**

MEMOIRE TAMPON  **115b**

SIG

**31**

**11b**

BOUGLE DE PREDICTION/ /DECODEUR  **12b**

DEQUANTIFICATEUR  **121b**

$Eab$

**123b**

$\sim Pb$  **124b**

MEMOIRE D'IMAGE

CODEUR PRINCIPAL

**13b**

$Yb = Pb + Eab$

$z_b = Xb - Yb$

QUANTIFICATEUR  **142b**

CODAGE A DEBIT VARIABLE  **143b**

**14b**

**32**

$e_a$

CODEUR AUXILIAIRE